# EUROPÄISCHE PATENTSCHRIFT

(11) **EP 4 543 732 B1**
(45) Veröffentlichungstag und Bekanntmachung des Hinweises auf die Patenterteilung: **08.04.2026**
(21) Anmeldenummer: 23734656.4
(22) Anmeldetag: 22.06.2023
(51) Int. Cl.: G06V 20/56, G08G 1/16, B60W 30/12, B60W 60/00, B62D 15/02

(54) **VERFAHREN ZUM BETREIBEN EINES SPURFÜHRUNGSASSISTENTEN EINES FAHRZEUGS UNTER BERÜCKSICHTIGUNG VON UMWELTBEDINGUNGEN, SPURFÜHRUNGSASSISTENT SOWIE FAHRZEUG**
METHOD FOR OPERATING A LANE GUIDANCE ASSISTANT OF A VEHICLE ACCORDING TO ENVIRONMENTAL CONDITIONS, LANE GUIDANCE ASSISTANT AND MOTOR VEHICLE
PROCÉDÉ DE FONCTIONNEMENT D'UN ASSISTANT DE GUIDAGE DE VOIE D'UN VÉHICULE SELON DES CONDITIONS ENVIRONNEMENTALES, ASSISTANT DE GUIDAGE DE VOIE ET VÉHICULE AUTOMOBILE

(30) Priorität: 24.06.2022 DE 102022115860
(43) Veröffentlichungstag der Anmeldung: 30.04.2025
(73) Patentinhaber: Bayerische Motoren Werke Aktiengesellschaft, 80809 München (DE)
(72) Erfinder: GOETZ, Alexander, 80796 München (DE)
(86) Internationale Anmeldenummer: PCT/EP2023/067036
(87) Internationale Veröffentlichungsnummer: WO 2023/247728

(56) Entgegenhaltungen:
- DE-A1- 102013 012 777
- DE-A1- 102017 208 384
- DE-A1- 102019 132 006
- DE-A1- 102019 202 187
- DE-B3- 102018 211 339

## Beschreibung

Die vorliegende Erfindung betrifft ein Verfahren zum Betreiben eines Spurführungsassistenten eines Fahrzeugs. Darüber hinaus betrifft die vorliegende Erfindung einen Spurführungsassistenten für ein Fahrzeug. Schließlich betrifft die vorliegende Erfindung ein Fahrzeug mit einem derartigen Spurführungsassistenten.

Aus dem Stand der Technik sind Spurführungsassistenten für Fahrzeuge hinreichend bekannt. Derartige Spurführungsassistenten, welche auch als Lenk- und Spurführungsassistent oder auch als aktive Spurhalteassistenten bezeichnet werden, dienen insbesondere dazu, das Fahrzeug innerhalb eines Fahrstreifens bzw. einer Fahrspur zu halten. Ein solcher Spurführungsassistenten nutzt die Umfelddaten von einem Umfeldsensor des Fahrzeugs, um die Begrenzungen eines Fahrstreifens bzw. Fahrspurmarkierungen zu erkennen. Falls solche Fahrspurmarkierungen mit einer ausreichenden Sicherheit erkannt werden, kann der Spurführungsassistenten aktiviert werden und es können Lenkeingriffe durchgeführt werden, um das Fahrzeug innerhalb der Fahrspur bzw. dem Fahrstreifen zu halten. Beispielsweise können die Lenkeingriffe derart erfolgen, dass das Fahrzeug mittig innerhalb des Fahrstreifens gehalten wird.

Im bekannten Stand der Technik wird die Verfügbarkeit des Spurführungsassistenten an verschiedene Bedingungen gekoppelt. Beispielsweise kann eine so genannte Entprellzeit vorgesehen sein, welche angibt, dass die Begrenzungen des Fahrstreifens bzw. die Fahrbahnmarkierungen über eine vorgegebene Zeit zuverlässig erkannt werden müssen. Darüber hinaus ist eine Anpassung dieser Entprellzeit bekannt, wenn das Vorhandensein bzw. die Erkennung von Spurmarkierungen durch vorhandene Umfeldsensoren oft wechselt. Beispielsweise können Fahrspurmarkierungen innerhalb einer bestimmten Zeitdauer, beispielsweise 30 Sekunden, mehrfach erkannt werden und auch wieder verschwinden. Diese Erhöhung der Entprellzeit dient dazu, eine durchgängige Verfügbarkeit des Spurführungsassistenten anbieten zu können und häufige Zustandswechsel zu vermeiden.

Das technische Problem, welches der beschriebene Stand der Technik mit sich bringt, ist zum einen der Nachteil, dass die Verfügbarkeit des Spurführungsassistenten insgesamt verringert wird, da die Entprellzeit zeitweise eine Aktivierung der Funktion verhindert. Zum anderen berücksichtigt der Stand der Technik keine aktuellen Gegebenheiten bzw. Parameter, welche Auswirkungen auf die Funktion des Spurführungsassistenten haben. Somit kann eine optimale Einstellung der Entprellzeiten nicht ermöglicht werden und die bestmögliche Verfügbarkeit der Funktion bei gleichzeitiger Durchgängigkeit des Funktionszustands wird ebenfalls nicht erreicht.

Die DE 10 2017 208 384 A1 offenbart ein Verfahren zum Betrieb eines Kraftfahrzeugs mit einem Stauassistenten. Bei dem Verfahren werden die folgenden Schritte durchgeführt: Einlesen von als Eingangsdaten des Stauassistenten dienenden Sensordaten, Auswerten der Sensordaten zum Bestimmen eines Wertes repräsentativ für eine Signalrauigkeit der Sensordaten, Vergleichen des Wertes mit einem Schwellwert, und Erzeugen eines Unterdruckungssignals zur Verhinderung der automatischen Aktivierung des Stauassistenten, wenn der Wert größer als der Schwellwert ist.

Es ist Aufgabe der vorliegenden Erfindung, eine Lösung aufzuzeigen, wie ein Spurführungsassistenten der eingangs genannten Art dahingehend verbessert werden kann, dass die Verfügbarkeit erhöht wird und gleichzeitig die Zuverlässigkeit verbessert wird.

Diese Aufgabe wird erfindungsgemäß durch ein Verfahren, durch einen Spurführungsassistenten sowie durch ein Fahrzeug mit den Merkmalen gemäß den unabhängigen Ansprüchen gelöst. Vorteilhafte Weiterbildungen der vorliegenden Erfindung sind in den abhängigen Ansprüchen angegeben.

Ein erfindungsgemäßes Verfahren dient zum Betreiben eines Spurführungsassistenten eines Fahrzeugs. Das Verfahren umfasst das Empfangen von Umfelddaten, welche eine Umgebung des Fahrzeugs beschreiben. Darüber hinaus umfasst das Verfahren das Erkennen von Fahrstreifenbegrenzungen, welche einen Fahrstreifen, auf welchem sich das Fahrzeug aktuell befindet, begrenzen. Außerdem umfasst das Verfahren das automatische Durchführen von Lenkeingriffen zum Halten des Fahrzeugs in dem Fahrstreifen, falls die Fahrstreifenbegrenzungen für eine vorbestimmte Entprellzeit erkannt werden. Darüber hinaus umfasst das Verfahren das fortlaufende Bestimmen von Umweltbedingungen, wobei die Umweltbedingungen einen aktuellen Aufenthaltsort des Fahrzeugs, ein Wetter in der Umgebung, eine aktuelle Tageszeit und/oder eine dem Fahrstreifen zugeordneten Straßentyp beschreiben. Zudem umfasst das Verfahren das Anpassen der Entprellzeit in Abhängigkeit von den fortlaufend bestimmten Umweltbedingungen.

Der Spurführungsassistent dient dazu, einen Fahrer des Fahrzeugs bei Lenkaufgaben zu unterstützen. Insbesondere dient der Spurführungsassistenten dazu, das Fahrzeug innerhalb des Fahrstreifens bzw. der aktuellen Fahrspur zu halten. Der Spurführungsassistent kann auch als Lenk- und Spurführungsassistent, als aktiver Spurhalteassistent oder als Lenkassistent bezeichnet werden. Der Spurführungsassistent kann zumindest einen Umfeldsensor aufweisen, mittels welchem die Umfelddaten bereitgestellt werden können. Diese Umfelddaten beschreiben eine Umgebung bzw. ein Umfeld des Fahrzeugs. Bei dem Umfeldsensor kann es sich beispielsweise um eine Kamera handeln. Bei einer Kamera kann es sich bei den Umfelddaten um Bilddaten handeln.

In den Umfelddaten können die Fahrstreifenbegrenzungen erkannt werden. Insbesondere werden die Fahrstreifenbegrenzungen erkannt, welche den Fahrstreifen, auf dem sich das Fahrzeug aktuell befindet, begrenzen. Es kann zudem vorgesehen sein, dass Fahrstreifenbegrenzungen von weiteren Fahrstreifen bzw. benachbarten Fahrstreifen erkannt werden. Bei den Fahrstreifenbegrenzungen kann es sich insbesondere um Fahrbahnmarkierungen, wie beispielsweise durchgezogene oder gestrichelte bzw. unterbrochene Linien handeln. Bei der Fahrstreifenbegrenzung kann es sich auch um eine bauliche Begrenzung, beispielsweise eine Wand, eine Leitplanke, einen Bordstein oder dergleichen handeln. Ferner kann als Fahrstreifenbegrenzung ein Grünstreifen, ein Kiesbett oder dergleichen erfasst werden.

Wenn die Fahrstreifenbegrenzungen mit einer vorbestimmten Wahrscheinlichkeit bzw. mit einer vorbestimmten Sicherheit für die Zeitspanne der Entprellzeit zuverlässig erkannt werden, kann die Funktionalität des Spurführungsassistenten aktiviert werden. Dies bedeutet, dass mittels des Spurführungsassistenten Lenkeingriffe bereitgestellt werden bzw. ein Überlagerungslenkmoment bereitgestellt wird, um das Fahrzeug innerhalb des Fahrstreifens bzw. der Fahrspur zu halten. Beispielsweise kann der Spurführungsassistent über ein aktives Lenksystem direkt in den Fahrverlauf eingreifen. Das von dem Spurführungsassistenten bereitgestellte Lenkmoment bzw. der bereitgestellte Lenkeingriff kann von dem Fahrer aber jederzeit durch das Betätigen des Lenkrads übersteuert werden.

Es ist vorgesehen, dass die Funktion des Spurführungsassistent erst dann aktiviert wird, falls die Fahrstreifenbegrenzungen bzw. die Fahrbahnmarkierungen für die Dauer der vorbestimmten Entprellzeit mit einer vorbestimmten Sicherheit bzw. Wahrscheinlichkeit erkannt werden. Gemäß der vorliegenden Erfindung wird es nun ermöglicht, diese Entprellzeit an die aktuellen Umweltbedingungen anzupassen. Diese Umweltbedingungen können zum einen den aktuellen Aufenthaltsort bzw. das Land, in dem sich das Fahrzeug aktuell befindet, beschreiben. Ferner können die Umweltbedingungen das Wetter in der Umgebung des Fahrzeugs bzw. die Wetterbedingungen in dem Umfeld des Fahrzeugs beschreiben. Alternativ oder zusätzlich können die Umweltbedingungen eine aktuelle Tageszeit bzw. die Beleuchtungsverhältnisse in der Umgebung des Fahrzeugs beschreiben. Darüber hinaus können die Umweltbedingungen einen Straßentyp der Straße, auf dem sich der Fahrstreifen befindet, beschreiben.

Es ist vorgesehen, dass die Umweltbedingungen fortlaufend bzw. kontinuierlich erfasst werden. Beispielweise können die Umweltbedingungen zu vorbestimmten Zeitpunkten bzw. in vorbestimmten Zeitintervallen erfasst werden. Somit kann auch die Entprellzeit an die sich ändernden Umweltbedingungen angepasst werden. Auf Grundlage dieser Umweltbedingungen kann die Entprellzeit angepasst werden. Auf diese Weise kann eine durchgängige Verfügbarkeit des Spurführungsassistenten erreicht werden und häufige Zustandswechsel zwischen einem aktiven Zustand und einem Stand-by-Zustand des Spurführungsassistenten können vermieden werden. Insgesamt kann somit die Zufriedenheit des Nutzers und die Kundenakzeptanz erhöht werden.

Bevorzugt wird anhand des aktuellen Aufenthaltsorts des Fahrzeugs eine länderspezifische Vorgabe für die Entprellzeit bestimmt und die Entprellzeit wird in Abhängigkeit von der länderspezifischen Vorgabe angepasst. Es ist also bevorzugt vorgesehen, dass die Umweltbedingungen den aktuellen Aufenthaltsort bzw. Standort des Fahrzeugs beschreiben. Insbesondere können die Umweltbedingungen beschreiben, in welchem Land sich das Fahrzeug aktuell befindet bzw. gefahren wird. Hierbei ist insbesondere vorgesehen, dass für unterschiedliche Länder bzw. Regionen unterschiedliche Entprellzeiten hinterlegt werden können und entsprechend abgerufen werden können. Beispielsweise können die Anforderungen der Kunden sowie die Bedingungen in den unterschiedlichen Ländern eine an das Land angepasste Einstellung der Entprellzeit notwendig machen. Beispielsweise können für Länder, wie China oder USA, kürzere Entprellzeiten als eine standardmäßig vorgegebene Entprellzeit vorgesehen sein. Hierbei kann der Spurführungsassistent bzw. der Lenkassistent bereits früher in einen aktiv regelnden Zustand übergehen, wenn eine stabile Erkennung von Spurmarkierungen und eine geeignete Straße gegeben sind. Insgesamt können somit die unterschiedlichen Anforderungen der Kunden in den Ländern, die Ausbauzustände der Straßen und dergleichen berücksichtigt werden.

In einer weiteren Ausführungsform wird anhand des Wetters und/oder der aktuellen Tageszeit eine Zuverlässigkeit der Erkennung von den Fahrstreifenbegrenzungen anhand der Umfelddaten bestimmt. Zudem wird die Entprellzeit bevorzugt in Abhängigkeit von der Zuverlässigkeit der Erkennung angepasst. Anhand des Wetters bzw. der Wetterdaten kann ermittelt werden, ob durch die Wetterbedingungen die Erfassung der Fahrstreifenbegrenzungen bzw. der Fahrbahnmarkierungen durch den zumindest einen Umfeldsensor eingeschränkt ist. Dies kann beispielsweise bei Regen, Schneefall, Nebel oder dergleichen der Fall sein. Beispielsweise kann die Erfassung der Fahrstreifenbegrenzungen mittels der Umfeldsensoren durch einen Niederschlag beeinträchtigt sein. Es kann auch vorgesehen sein, dass sich Niederschlag, wie beispielsweise Schnee und/oder Eis auf dem Fahrstreifen abgelagert hat, und somit eine Erfassung der Fahrstreifen bzw. der Fahrstreifenbegrenzungen nicht oder nur sehr eingeschränkt möglich ist. Zudem kann bei einer nassen Fahrbahnoberfläche eine Reflexion auftreten, welche ebenfalls die Erfassung der Fahrbahnmarkierungen mittels des Umfeldsensors beeinträchtigt.

Auf Grundlage der aktuellen Tageszeit kann insbesondere die Beleuchtungssituation in der Umgebung erfasst werden. Auch diese Beleuchtungssituation bzw. Helligkeit in der Umgebung kann die Erfassung der Fahrstreifenbegrenzungen mittels des Umfeldsensors beeinflussen. Beispielsweise kann bei Dämmerung und bei Nacht die Erfassung der Fahrbahnbegrenzungen stark beeinträchtigt sein. Auch eine starke Sonneneinstrahlung kann die Erfassung der Fahrstreifenbegrenzungen deutlich verschlechtern. Insgesamt kann auf Grundlage der Wetterdaten und/oder der aktuellen Tageszeit ermittelt werden, ob die Erfassung der Fahrstreifenbegrenzungen mittels des Umfeldsensors im Vergleich zu einem definierten Normalzustand beeinträchtigt ist. Dies kann dann bei der Anpassung der Entprellzeit berücksichtigt werden.

Hierbei ist insbesondere vorgesehen, dass die Entprellzeit erhöht wird, falls die Zuverlässigkeit der Erkennung geringer als ein vorbestimmter Durchschnittswert ist. Bei schlechtem Wetter, welches anhand der Umfelddaten bzw. der Sensordaten des zumindest einen Umfeldsensors oder auch aus einem Wetterbericht empfangen wird, wird die Entprellzeit erhöht. Hier bestehen das Risiko einer instabilen Erkennung der Fahrstreifen bzw. der Fahrstreifenbegrenzungen und damit eines wechselnden Funktionszustands sowie das Risiko einer falschen Regelung des Fahrzeugs wegen unzureichender Umfelddaten. Dies gilt in gleicher Weise für eine Fahrt bei Dämmerung oder während der Nacht.

Weiterhin ist vorteilhaft, wenn die Entprellzeit verringert wird, falls der Straßentyp einer Autobahn entspricht. Es ist also bevorzugt vorgesehen, dass auf Autobahnen eine Verkürzung der Entprellzeit erfolgt, da hier von stabilen und gut sichtbaren Fahrspurmarkierungen bzw. Fahrstreifenbegrenzungen auszugehen ist. Das Gleiche gilt für den Straßentyp Schnellstraße, Bundesstraße oder dergleichen. Grundsätzlich kann der Ausbauzustand einer Straße sowie das üblicherweise oder bekannte Vorhandensein von Fahrbahnmarkierungen bzw. Fahrstreifenbegrenzungen herangezogen werden. Beispielsweise können digitale Kartendaten oder Umfelddaten von weiteren Fahrzeugen herangezogen werden, welche die Qualität der Fahrbahnmarkierungen beschreiben. Darüber hinaus kann berücksichtigt werden, wann die Straße gebaut wurde bzw. ob die Straße erneuert wurde. Somit kann die Entprellzeit ideal an den aktuellen Straßentyp angepasst werden.

In einer weiteren Ausführungsform werden die Umweltbedingungen anhand der Umfelddaten, anhand von satellitengestützten Positionsdaten, anhand von digitalen Kartendaten und/oder anhand von Wetterdaten bestimmt. Um die Umweltbedingungen bestimmen zu können, können direkt die Umfelddaten bzw. die Sensordaten des zumindest einen Umfeldsensors herangezogen werden. Somit kann beispielsweise erkannt werden, ob ein Niederschlag in der Umgebung des Fahrzeugs vorhanden ist. Es kann zudem festgestellt werden, ob sich Niederschlag auf der Fahrbahnoberfläche abgelagert hat. Zum Bestimmen des aktuellen Wetters bzw. der Wetterdaten können zudem Wetterdaten von einer entsprechenden Sendestation, einem Backend oder dergleichen empfangen werden. Zum Bestimmen der aktuellen Tageszeit können Daten einer Uhr und/oder Daten eines Lichtsensors oder dergleichen berücksichtigt werden. Um die aktuelle Position bzw. den aktuellen Aufenthaltsort des Fahrzeugs bestimmen zu können, können digitale Kartendaten und/oder satellitengestützte Positionsbestimmungssysteme genutzt werden. Auf diese Weise können die Umweltbedingungen auf zuverlässige Weise ermittelt werden.

Ein erfindungsgemäßer Spurführungsassistent für ein Fahrzeug ist dazu eingerichtet Umfelddaten, welche eine Umgebung des Fahrzeugs beschreiben zu empfangen. Darüber hinaus ist der Spurführungsassistent dazu eingerichtet, Fahrstreifenbegrenzungen, welche einen Fahrstreifen, auf welchem sich das Fahrzeug aktuell befindet, begrenzen, zu erkennen. Des Weiteren ist der Spurführungsassistent dazu eingerichtet, automatische Lenkeingriffe zum Halten des Fahrzeugs in dem Fahrstreifen durchzuführen, falls die Fahrstreifenbegrenzungen für eine vorbestimmte Entprellzeit erkannt werden. Ferner ist der Spurführungsassistent dazu eingerichtet, fortlaufend Umweltbedingungen zu bestimmen, wobei die Umweltbedingungen einen aktuellen Aufenthaltsort des Fahrzeugs, ein Wetter in der Umgebung, eine aktuelle Tageszeit und/oder einen dem Fahrstreifen zugeordneten Straßentyp beschreiben. Außerdem ist der Spurführungsassistent dazu eingerichtet, die Entprellzeit in Abhängigkeit von den fortlaufend bestimmten Umweltbedingungen anzupassen.

Die Umfelddaten können mit zumindest einem Umfeldsensor des Fahrzeugs bzw. des Spurführungsassistenten bereitgestellt werden. Beispielsweise kann dieser Umfeldsensor als Kamera ausgebildet sein. Es kann ferner vorgesehen sein, dass der Umfeldsensor als optischer Sensor, Infrarotsensor oder Lidar-Sensor ausgebildet ist. Der Spurführungsassistent kann zudem eine entsprechende Recheneinrichtung aufweisen, welche beispielsweise durch ein elektronisches Steuergerät des Fahrzeugs gebildet sein kann. Auf dieser Recheneinrichtung kann ein entsprechendes Programm bzw. Computerprogramm zum Ablauf gebracht werden. Auf diese Weise können die Fahrstreifenbegrenzungen auf Grundlage der Umfelddaten bestimmt werden.

Darüber hinaus kann der Spurführungsassistent einen Empfänger zum Empfangen von Wetterdaten, zum Empfangen von Daten aus einem Backend oder dergleichen aufweisen. Es kann zudem vorgesehen sein, dass der Spurführungsassistent ein satellitengestütztes Positionsbestimmungssystem aufweist. Mittels der Recheneinrichtung können dann die Umweltbedingungen bestimmt werden und die Entprellzeit in Abhängigkeit von den fortlaufend bestimmten Umweltbedingungen angepasst werden.

Darüber hinaus kann der Spurführungsassistent einen entsprechenden Aktuator aufweisen, mittels welchem die Lenkeingriffe durchgeführt werden können bzw. ein zusätzliches Lenkmoment bereitgestellt werden kann.

Ein erfindungsgemäßes Fahrzeug umfasst einen erfindungsgemäßen Spurführungsassistenten. Das Fahrzeug ist insbesondere als Personenkraftwagen ausgebildet.

Die mit Bezug auf das erfindungsgemäße Verfahren vorgestellten bevorzugten Ausführungsformen und deren Vorteile gelten entsprechend für den erfindungsgemäßen Spurführungsassistenten sowie für das erfindungsgemäße Fahrzeug.

Die Erfindung wird nun anhand von bevorzugten Ausführungsbeispielen sowie unter Bezugnahme auf die beigefügten Zeichnungen näher erläutert. Dabei zeigen:
- Fig. 1: eine schematische Darstellung eines Fahrzeugs, welches einen Spurführungsassistenten aufweist; und
- Fig. 2: das Fahrzeug gemäß Fig. 1, welches sich auf einem Fahrstreifen befindet.

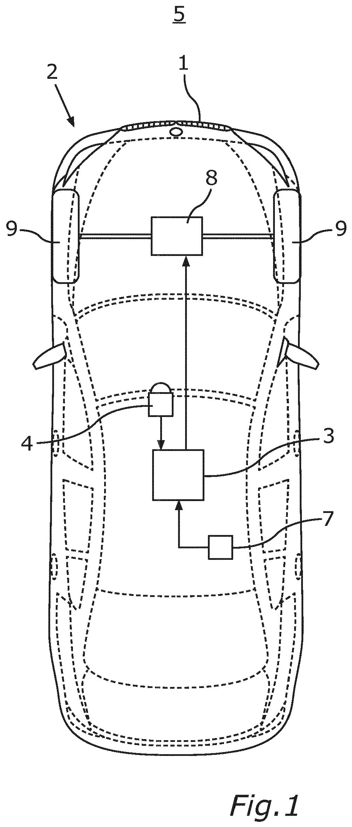

Fig. 1 zeigt ein Fahrzeug 1, welches vorliegend als Personenkraftwagen ausgebildet ist, in einer Draufsicht. Das Fahrzeug 1 umfasst einen Spurführungsassistenten 2, mittels welchem das Fahrzeug 1 innerhalb eines Fahrstreifens 6 bzw. einer Fahrspur gehalten werden kann. Der Spurführungsassistent 2 umfasst eine Recheneinrichtung 3, welche beispielsweise durch zumindest ein elektronisches Steuergerät des Fahrzeugs 1 gebildet sein kann.

Darüber hinaus umfasst der Spurführungsassistent 2 zumindest einen Umfeldsensor 4. In dem gezeigten Beispiel umfasst der Spurführungsassistent 2 einen Umfeldsensor 4, welcher vorliegend als Kamera ausgebildet ist. Mit dem Umfeldsensor 4 können Umfelddaten bzw. Bilddaten bereitgestellt werden, welche eine Umgebung 5 des Fahrzeugs 1 beschreiben. Des Weiteren umfasst der Spurführungsassistent 2 eine Empfangseinrichtung 7, mittels welcher beispielsweise Wetterdaten empfangen werden können. Zudem können mittels der Empfangseinrichtung 7 Daten von einem Backend, aus dem Internet, von einem Radiosender oder dergleichen empfangen werden. Des Weiteren können mittels der Empfangseinrichtung 7 Daten von einem satellitengestützten Positionsbestimmungssystem empfangen werden. Anstelle der beispielhaften Empfangseinrichtung 7 können auch mehrere einzelne Empfangseinrichtungen verwendet werden.

Die Recheneinrichtung 3 ist ferner dazu eingerichtet, ein vorliegend nur schematisch dargestelltes Lenksystem 8 des Fahrzeugs 1 anzusteuern. Durch die Ansteuerung des Lenksystems 8 kann ein Lenkmoment bzw. ein Lenkeingriff erzeugt werden, um das Fahrzeug 1 in dem Fahrstreifen 6 bzw. der Fahrspur zu halten. Durch die Ansteuerung des Lenksystems 8 können lenkbare Räder 9 des Fahrzeugs 1 gelenkt werden und somit die Querführung des Fahrzeugs 1 beeinflusst werden.

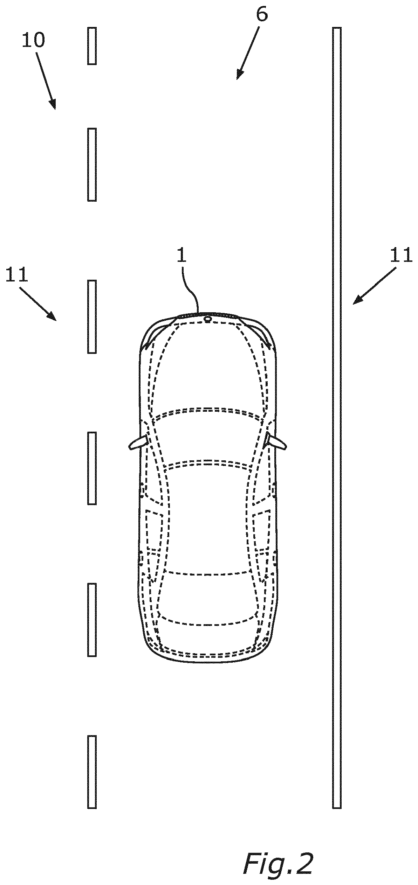

Fig. 2 zeigt in einer schematischen Darstellung das Fahrzeug 1, welches sich auf einem Fahrstreifen 6 befindet. Dieser Fahrstreifen 6 ist einer Straße 10 zugeordnet. Der Fahrstreifen 6 ist durch Fahrstreifenbegrenzungen 11 begrenzt. Bei den Fahrstreifenbegrenzungen 11 handelt es sich um entsprechende Fahrbahnmarkierungen, welche auf die Oberfläche der Fahrbahn aufgebracht sind. Mittels der Recheneinrichtung 3 können auf Grundlage der Umfelddaten, die mit dem Umfeldsensor 4 bereitgestellt werden, diese Fahrstreifenbegrenzungen 11 bzw. Fahrbahnmarkierungen erkannt werden.

Wenn diese Fahrstreifenbegrenzungen 11 für eine vorbestimmte Entprellzeit mit einer vorbestimmten Wahrscheinlichkeit bzw. Sicherheit erkannt werden, kann die Funktionalität des Spurführungsassistenten 2 aktiviert werden. Hierzu werden von dem Spurführungsassistenten 2 entsprechende Lenkeingriffe in das Lenksystem 8 vorgenommen, sodass das Fahrzeug 1 beispielsweise mittig innerhalb des Fahrstreifens 6 geführt wird.

Zudem ist vorgesehen, dass mittels der Recheneinrichtung 3 Umweltbedingungen erfasst werden und die Entprellzeit in Abhängigkeit von den erfassten Umweltbedingungen angepasst wird. Dabei ist insbesondere vorgesehen, dass die Umweltbedingungen fortlaufend bzw. zu definierten Zeitpunkten bestimmt werden und daraufhin gegebenenfalls die Entprellzeit angepasst wird. Auf diese Weise kann auf wechselnde Umgebungsbedingungen bzw. Umweltbedingungen reagiert werden und somit häufige Zustandswechsel zwischen einem aktiven Zustand und einem Stand-by-Zustand des Spurführungsassistenten 2 vermieden werden.

Die Umweltbedingungen können zum einen den aktuellen Aufenthaltsort bzw. die Position des Fahrzeugs 1 beschreiben. Der aktuelle Aufenthaltsort kann auf Grundlage von satellitengestützten Positionsdaten und/oder digitalen Kartendaten bestimmt werden. Darüber hinaus können die Umweltbedingungen das Wetter in der Umgebung 5 des Fahrzeugs 1 beschreiben. Das Wetter in der Umgebung 5 kann auf Grundlage der Umfelddaten des Umfeldsensors 4 oder anhand von mittels der Empfangseinrichtung 7 empfangenen Wetterdaten bestimmt werden. Des Weiteren können die Umweltbedingungen eine aktuelle Tageszeit bzw. eine Beleuchtungssituation in der Umgebung 5 beschreiben. Diese Daten bezüglich der aktuellen Tageszeit bzw. der Beleuchtung können ebenfalls mittels des Umfeldsensors 4 oder anhand von Uhrzeitdaten oder dergleichen bestimmt werden. Schließlich können die Umweltbedingungen einen Straßentyp der Straße 10, welcher der Fahrstreifen 6 zugeordnet ist, beschreiben. Auf Grundlage der bestimmten Umweltbedingungen kann dann die Entprellzeit angepasst werden. Dies bedeutet insbesondere, dass die Entprellzeit erhöht oder verringert werden kann.

Nachfolgend wird ein Beispiel zur Anpassung der Entprellzeit in Abhängigkeit von den Umweltbedingungen beschrieben: Es wird davon ausgegangen, dass sich das Fahrzeug 1 aktuell in China befindet. Aufgrund höherer Anforderungen an die Verfügbarkeit von Assistenzsystemen am chinesischen Markt wird die Entprellzeit zur Aktivierung der des Spurführungsassistenten 2 in diesem Fahrzeug 1 um die Hälfte ausgehend von einem Standartwert für die Entprellzeit verringert. Dies führt zu einer schnelleren Aktivierung des Spurführungsassistenten 2, nachdem die Fahrstreifenbegrenzungen 11 erkannt wurden und erhöht damit die Verfügbarkeit. Während der Fahrt des Fahrzeugs 1 tritt Regen ein. Diese Wetterbedingung wird mittels des Spurführungsassistenten 2 erkannt und führt folglich zu einer Erhöhung der Entprellzeit. Beispielsweise kann die Entprellzeit auf Grundlage des erkannten Regens verdoppelt werden. Nach einiger Zeit bricht die Dämmung herein und der Regen hält an. Durch die Dämmerung wird die Entprellzeit ein weiteres Mal verdoppelt. Damit wird die Entprellzeit wie folgt angepasst: Standartwert * 0,5(Land) * 2(Regen) * 2(Dämmerung). Der Fahrer fährt anschließend auf die Autobahn, was wiederum von dem Spurführungsassistenten 2 erkannt wird und zu einer Halbierung der Entprellzeit führt: Standartwert * 0,5(Land) * 2(Regen) * 2(Dämmerung) * 0,5(Autobahn).

Durch die Berücksichtigung dieser Faktoren wird eine verbesserte Verfügbarkeit des Lenkassistenten bzw. des Spurführungsassistenten 2 erreicht, die sich an die gängigen Anforderungen des länderspezifischen Markts anpasst und zugleich eine dynamische Anpassung an gegebene Bedingungen zulässt.

## Patentansprüche

1. Verfahren zum Betreiben eines Spurführungsassistenten (2) eines Fahrzeugs (1) mit den Schritten:
- Empfangen von Umfelddaten, welche eine Umgebung (5) des Fahrzeugs (1) beschreiben,
- Erkennen von Fahrstreifenbegrenzungen (11), welche einen Fahrstreifen (6), auf welchem sich das Fahrzeug (1) aktuell befindet, begrenzen, und
- automatisches Durchführen von Lenkeingriffen zum Halten des Fahrzeugs (1) in dem Fahrstreifen (6), falls die Fahrstreifenbegrenzungen (11) für eine vorbestimmte Entprellzeit erkannt werden,
**gekennzeichnet durch**
- fortlaufendes Bestimmen von Umweltbedingungen, wobei die Umweltbedingungen einen aktuellen Aufenthaltsort des Fahrzeugs (1), ein Wetter in der Umgebung, eine aktuelle Tageszeit und/oder einen dem Fahrstreifen (6) zugeordneten Straßentyp beschreiben und
- Anpassen der Entprellzeit in Abhängigkeit von den fortlaufend bestimmten Umweltbedingungen.

2. Verfahren nach Anspruch 1,
**dadurch gekennzeichnet, dass**
anhand des aktuellen Aufenthaltsorts des Fahrzeugs (1) eine länderspezifische Vorgabe für die Entprellzeit bestimmt wird und die Entprellzeit in Abhängigkeit von der länderspezifischen Vorgabe angepasst wird.

3. Verfahren nach Anspruch 1 oder 2,
**dadurch gekennzeichnet, dass**
anhand des Wetters und/oder der aktuellen Tageszeit eine Zuverlässigkeit der Erkennung von den Fahrstreifenbegrenzungen (11) anhand der Umfelddaten bestimmt wird und die Entprellzeit in Abhängigkeit von der Zuverlässigkeit der Erkennung angepasst wird.

4. Verfahren nach Anspruch 3,
**dadurch gekennzeichnet, dass**
die Entprellzeit erhöht wird, falls die Zuverlässigkeit der Erkennung geringer als ein vorbestimmter Durchschnittswert ist.

5. Verfahren nach einem der vorhergehenden Ansprüche,
**dadurch gekennzeichnet, dass**
die Entprellzeit verringert wird, falls der Straßentyp einer Autobahn entspricht.

6. Verfahren nach einem der vorhergehenden Ansprüche,
**dadurch gekennzeichnet, dass**
die Umweltbedingungen anhand der Umfelddaten, satellitengestützten Positionsdaten, digitalen Kartendaten und/oder Wetterdaten bestimmt werden.

7. Spurführungsassistent (2) für ein Fahrzeug (1), wobei der Spurführungsassistent (2) dazu eingerichtet ist:
- Umfelddaten, welche eine Umgebung (5) des Fahrzeugs (1) beschreiben, zu empfangen
- Fahrstreifenbegrenzungen (11), welche einen Fahrstreifen (6), auf welchem sich das Fahrzeug (1) aktuell befindet, begrenzen, zu erkennen und
- Lenkeingriffe zum Halten des Fahrzeugs (1) in dem Fahrstreifen (6) durchzuführen, falls die Fahrstreifenbegrenzungen (11) für eine vorbestimmte Entprellzeit erkannt werden,
**dadurch gekennzeichnet, dass**
der Spurführungsassistent (2) ferner dazu eingerichtet ist,
- fortlaufend Umweltbedingungen zu bestimmen, wobei die Umweltbedingungen einen aktuellen Aufenthaltsort des Fahrzeugs (1), ein Wetter in der Umgebung (5), eine aktuelle Tageszeit und/oder einen dem Fahrstreifen zugeordneten Straßentyp beschreiben, und
- die Entprellzeit in Abhängigkeit von den fortlaufend bestimmten Umweltbedingungen anzupassen.

8. Fahrzeug (1), insbesondere Personenkraftwagen, umfassend einen Spurführungsassistenten (2) nach Anspruch 7.

## Claims

1. Method for operating a lane guidance assistant (2) of a vehicle (1), comprising the steps of:
- receiving environment data that describe surroundings (5) of the vehicle (1),
- identifying lane boundaries (11) that bound a lane (6) that the vehicle (1) is currently in, and
- automatically performing steering interventions to keep the vehicle (1) in the lane (6) if the lane boundaries (11) are identified for a predetermined debounce time,
**characterized by**
- continual determination of environmental conditions, the environmental conditions describing a current location of the vehicle (1), a weather in the surroundings, a current time of day and/or a road type associated with the lane (6), and
- adaptation of the debounce time on the basis of the continually determined environmental conditions.

2. Method according to Claim 1,
**characterized in that**
the current location of the vehicle (1) is taken as a basis for determining a country-specific stipulation for the debounce time, and the debounce time is adapted on the basis of the country-specific stipulation.

3. Method according to Claim 1 or 2,
**characterized in that**
the weather and/or the current time of day is/are taken as a basis for determining a reliability of the identification of the lane boundaries (11) on the basis of the environment data, and the debounce time is adapted on the basis of the reliability of the identification.

4. Method according to Claim 3,
**characterized in that**
the debounce time is increased if the reliability of the identification is lower than a predetermined average value.

5. Method according to one of the preceding claims,
**characterized in that**
the debounce time is reduced if the road type is consistent with a freeway.

6. Method according to one of the preceding claims,
**characterized in that**
the environmental conditions are determined on the basis of the environment data, satellite-based position data, digital map data and/or weather data.

7. Lane guidance assistant (2) for a vehicle (1), the lane guidance assistant (2) being configured:
- to receive environment data that describe surroundings (5) of the vehicle (1),
- to identify lane boundaries (11) that bound a lane (6) that the vehicle (1) is currently in, and
- to perform steering interventions to keep the vehicle (1) in the lane (6) if the lane boundaries (11) are identified for a predetermined debounce time,
**characterized in that**
the lane guidance assistant (2) is further configured
- to continually determine environmental conditions, the environmental conditions describing a current location of the vehicle (1), a weather in the surroundings (5), a current time of day and/or a road type associated with the lane, and
- to adapt the debounce time on the basis of the continually determined environmental conditions.

8. Vehicle (1), in particular an automobile, comprising a lane guidance assistant (2) according to Claim 7.

## Revendications

1. Procédé pour faire fonctionner un système d'aide au maintien dans la voie (2) d'un véhicule (1), comprenant les étapes consistant à :
- recevoir des données environnementales décrivant un environnement (5) du véhicule (1),
- reconnaître des limites de voies (11) qui délimitent une voie (6) sur laquelle le véhicule (1) se trouve actuellement, et
- effectuer automatiquement des interventions sur la direction pour maintenir le véhicule (1) dans la voie (6), si les limites de voies (11) sont reconnues pendant un temps de réponse prédéterminé,
**caractérisé par** les étapes consistant à
- déterminer en continu des conditions environnementales, les conditions environnementales décrivant un emplacement actuel du véhicule (1), des conditions météorologiques dans l'environnement, une heure actuelle de la journée et/ou un type de route associé à la voie (6) ; et
- ajuster le temps de réponse en fonction des conditions environnementales déterminées en continu.

2. Procédé selon la revendication 1,
**caractérisé**
**en ce qu'**une indication spécifique à un pays pour le temps de réponse est déterminée sur la base de l'emplacement actuel du véhicule (1), et le temps de réponse est ajusté en fonction de l'indication spécifique à un pays.

3. Procédé selon la revendication 1 ou 2,
caractérisé
la fiabilité de la reconnaissance des limites de voies (11) est déterminée sur la base des données environnementales en fonction des conditions météorologiques et/ou de l'heure actuelle de la journée, et le temps de réponse est ajusté en fonction de la fiabilité de la reconnaissance.

4. Procédé selon la revendication 3,
caractérisé
le temps de réponse est augmenté si la fiabilité de la reconnaissance est inférieure à une moyenne prédéterminée.

5. Procédé selon l'une des revendications précédentes,
caractérisé
le temps de réponse est réduit si le type de route correspond à une autoroute.

6. Procédé selon l'une des revendications précédentes,
caractérisé
les conditions environnementales sont déterminées sur la base des données environnementales, de données de positionnement par satellite, de données cartographiques numériques et/ou de données météorologiques.

7. Système d'aide au maintien dans la voie (2) pour un véhicule (1), le système d'aide au maintien dans la voie (2) étant conçu pour :
- recevoir des données environnementales décrivant un environnement (5) du véhicule (1),
- reconnaître des limites de voies (11) qui délimitent une voie (6) sur laquelle le véhicule (1) se trouve actuellement, et
- effectuer des interventions sur la direction pour maintenir le véhicule (1) dans la voie (6), si les limites de voies (11) sont reconnues pendant un temps de réponse prédéterminé,
caractérisé
le système d'aide au maintien dans la voie (2) est en outre conçu pour
- déterminer en continu des conditions environnementales, les conditions environnementales décrivant l'emplacement actuel du véhicule (1), des conditions météorologiques dans l'environnement (5), une heure actuelle de la journée et/ou un type de route associé à la voie, et
- ajuster le temps de réponse en fonction des conditions environnementales déterminées en continu.

8. Véhicule (1), en particulier voiture particulière, comprenant un système d'aide au maintien dans la voie (2) selon la revendication 7.
